# EUROPÄISCHE PATENTANMELDUNG

(11) **EP 0 576 856 A2**
(43) Veröffentlichungstag der Anmeldung: **05.01.1994**
(21) Anmeldenummer: 93108944.5
(22) Anmeldetag: 03.06.1993
(51) Int. Cl.: H04L 12/56, H04Q 11/04

(54) **Verfahren und Schaltungsanordnung zum Übertragen eines kontinuierlichen ATM-Bitstromes**

(30) Priorität: 30.06.1992 DE 4221477
(71) Anmelder: SIEMENS AKTIENGESELLSCHAFT, D-80333 München (DE)
(72) Erfinder: Rau, Peter, Dr. Dipl.-Phys., D-8000 München 60 (DE)

(57) **Zusammenfassung**

Der kontinuierliche Bitstrom tritt mit einer gegenüber der für Eingänge (E1,..., En) und Ausgänge (A1,..., An) des ATMNetzes (KE) jeweils festgelegten Übertragungsbitrate höheren Übertragungsbitrate auf. Dieser kontinuierliche Bitstrom wird in Signalabschnitte unterteilt, die hinsichtlich ihrer Bitanzahl zuzüglich einer festgelegten Anzahl von Informationsbits der Anzahl der in dem Informationsteil einer Nachrichtenzelle als Nutzsignale übertragbaren Bits entspricht. In aufeinanderfolgenden Steuerzyklen wird jeweils eine dem Bitratenverhältnis der betreffenden Übertragungsbitraten entsprechende Anzahl von Signalabschnitten unter Anfügen einer sich fortlaufend verändernden Signalabschnitt-Folgenummer jeweils in den Informationsteil einer Nachrichtenzelle eingefügt. Die Nachrichtenzellen werden dann über unterschiedliche Übertragungswege innerhalb des ATM-Netzes übertragen und anschließend nach Maßgabe der in den Nachrichtenzellen enthaltenen Signalabschnitt-Folgenummern wieder zu einem kontinuierlichen Bitstrom zusammengefügt.

## Beschreibung

Die Erfindung betrifft ein Verfahren und eine Schaltungsanordnung gemäß Oberbegriff des Patentanspruches 1 bzw. des Patentanspruches 4.

Es ist bereits ein Verfahren zum Weiterleiten von auf Zubringerleitungen im Zuge von virtuellen Verbindungen nach einem asynchronen Übertragungsverfahren übertragenen Nachrichtenzellen, die jeweils einen die jeweilige virtuelle Verbindung bezeichnenden Zellenkopf aufweisen, über eine wenigstens zwei redundante Koppelvielfache aufweisende Zellenvermittlungseinrichtung zu mit dieser verbundenen Abnehmerleitungen hin bekannt (europäische Patentanmeldung 89 10 3798). Bei diesem bekannten Verfahren wird für jede der auf einer der Zubringerleitungen im Zuge einer virtuellen Verbindung übertragenen Nachrichtenzellen durch Vermehrfachen eine Nachrichtenzellen-Gruppe mit einer der Anzahl der redundanten Koppelvielfache entsprechenden Anzahl von identischen Nachrichtenzellen gebildet. In den Zellenkopf jeder der Nachrichtenzellen einer Nachrichtenzellen-Gruppe wird dabei eine identische, für aufeinanderfolgende Nachrichtenzellen-Gruppen sich ändernde Zusatzkennung in Form einer fortlaufend vergebenen Nachrichtenzellen-Folgenummer eingetragen. Anschließend werden die Nachrichtenzellen einer Nachrichtenzellen-Gruppe getrennt über die redundanten Koppelvielfache in Richtung zu der für die jeweilige virtuelle Verbindung in Frage kommenden Abnehmerleitung hin übertragen. Nach einer solchen Übertragung über die redundanten Koppelvielfache wird schließlich anhand der den Nachrichtenzellen jeweils beigefügten Zusatzkennung lediglich eine der zu einer Nachrichtenzellen-Gruppe gehörenden Nachrichtenzellen an die in Frage kommende Abnehmerleitung weitergeleitet.

Darüber hinaus ist bereits ein Verfahren zur Vermittlung von Nachrichtenzellen eines einen Nachrichtenzellenstrom nach einem asynchronen Übertragungsverfahren transportierenden Übertragungssystems über ein mit Moduln aufgebautes Koppelfeld vorgeschlagen worden (europäische Patentanmeldung 91 10 7434). Die Transportbitrate des Übertragungssystems beträgt ein Mehrfaches der Übertragungsbitrate der Koppelelemente der Module. Zu vermittelnde Nachrichtenzellen werden dabei auf eine dem Mehrfachen entsprechende Anzahl von Koppelfeldeingängen jeweils unter Hinzufügen von Informationen verteilt. Diese Informationen bezeichnen alle diejenige Module, über die die jeweiligen Nachrichtenzellen zu einem Ausgang des Koppelfeldes durchgeschaltet werden sollen. Die zu verschiedenen Ausgängen übertragenen Nachrichtenzellen werden dann wieder zu einem Nachrichtenzellenstrom zusammengefaßt. Dabei ist u.a. vorgesehen, daß den Nachrichtenzellen vor der Durchschaltung durch das Koppelfeld verbindungsindividuell eine zyklisch fortlaufende Folgenummer hinzugefügt wird, anhand der bei der Zusammenfassung zu dem Nachrichtenzellenstrom die Reihenfolge der Nachrichtenzellen für jede Verbindung sichergestellt wird, und daß die Nachrichtenzellen auf die Koppelfeldeingänge zyklisch verteilt werden.

Es ist nun Aufgabe der vorliegenden Erfindung, einen Weg zu zeigen, wie ein Verfahren und eine Schaltungsanordnung der eingangs genannten Art ausgebildet werden können, um mit einem geringen Steuerungsaufwand einen kontinuierlichen Bitstrom unter Einbeziehung wenigstens einer nach einem asynchronen Übertragungsprinzip arbeitenden ATM-Kommunikationseinrichtung übertragen zu können.

Gelöst wird diese Aufgabe durch die im Patentanspruch 1 angegebenen Verfahrensmerkmale bzw. durch die im Patentanspruch 4 angegebenen schaltungstechnischen Merkmale.

Das Verfahren gemäß der vorliegenden Erfindung bringt dabei den Vorteil mit sich, daß ein kontinuierlicher Bitstrom, d.h. ein beispielsweise nach einem synchronen Übertragungsprinzip übertragener Bitstrom ohne Zellenstruktur, signalabschnittweise in den Informationsteilen von Nachrichtenzellen über eine Mehrzahl von Eingängen der ATM-Kommunikationseinrichtung übertragen wird und dabei für die Rückgewinnung eines kontinuierlichen Bitstromes erforderliche Zusatzinformationen in Form von Signalabschnitt-Folgenummern ausschließlich in den Informationsteilen von Nachrichtenzellen, d.h. in dem eigentlichen Benutzerfeld der Nachrichtenzellen, übertragen werden. Damit weisen Signalabschnitte des kontinuierlichen Bitstromes enthaltende Nachrichtenzellen hinsichtlich ihres jeweiligen Zellenkopfes keine Modifizierungen gegenüber den Zellenköpfen der übrigen über die ATM-Kommunikationseinrichtung übertragenen Nachrichtenzellen auf, wodurch für die Übertragung der für den ursprünglichen kontinuierlichen Bitstrom vorgesehenen Nachrichtenzellen innerhalb der ATM-Kommunikationseinrichtung kein zusätzlicher Steuerungsaufwand erforderlich ist. Vielmehr erfolgt nach einer Übertragung der Signalabschnitte enthaltenden Nachrichtenzellen eine Rückgewinnung eines kontinuierlichen Bitstromes mit einer Signalabschnittfolge, die der Signalabschnittfolge des ursprünglichen kontinuierlichen Bitstromes entspricht, ausschließlich auf Benutzerebene, indem die in den Informationsfeldern der Nachrichtenzellen übertragenen Signalabschnitt-Folgenummern ausgewertet werden.

Vorteilhafte Ausgestaltungen des Verfahrens gemäß der vorliegenden Erfindung ergeben sich aus den Patentansprüchen 2 und 3. Der Vorteil der Ausgestaltung nach dem Patentanspruch 2 besteht dabei darin, daß für die Übertragung von Nachrichtenzellen über die einzelnen Eingänge der ATM-Kommunikationseinrichtung die gleichen Signalabschnitt-Folgenummern benutzt werden, so daß für diese Signalabschnitt-Folgenummern in den Informationsfeldern der Nachrichtenzellen eine relativ geringe Anzahl von Bitstellen zu reservieren ist. Der Vorteil der Ausgestaltung gemäß Patentanspruch 3 besteht dagegen darin, daß es anhand von den Signalabschnitt-Folgenummern beigefügten Prüfinformationen in einfacher Weise möglich ist, Übertragungsfehler innerhalb der ATM-Kommunikationseinrichtung feststellen zu können.

Die vorstehend genannte Aufgabe wird bei einer Schaltungsanordnung der eingangs genannten Art durch die im Patentanspruch 4 angegebenen schaltungstechnischen Merkmale gelöst. Der Vorteil dieser Schaltungsanordnung besteht dabei in dem geringen schaltungstechnischen Aufwand für die Übertragung eines kontinuierlichen Bitstromes über eine ATM-Kommunikationseinrichtung und für die Rückgewinnung eines hinsichtlich der einzelnen Bits folgerichtigen kontinuierlichen Bitstromes unter Berücksichtigung von unterschiedlichen Laufzeiten von Nachrichtenzellen innerhalb der ATM-Kommunikationseinrichtung.

Im folgenden wird die vorliegende Erfindung anhand von Zeichnungen beispielsweise näher erläutert.
FIG 1 zeigt in einem Blockschaltbild eine ATM-Kommunikationseinrichtung, bei der die Erfindung angewandt ist,
FIGUREN 2 bis 4 zeigen jeweils Diagramme, auf die im folgenden noch näher eingegangen wird,
FIG 5 zeigt einen möglichen Aufbau einer in FIG 1 lediglich schematisch dargestellten Behandlungseinrichtung und
FIG 6 zeigt den möglichen Aufbau einer in FIG 1 lediglich schematisch dargestellten Auswerteeinrichtung.

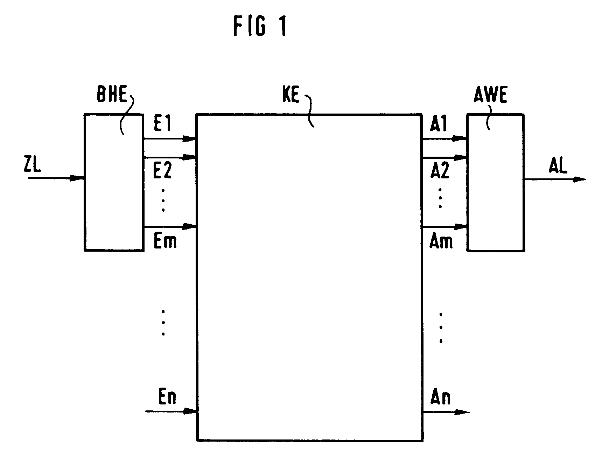

In FIG 1 ist eine nach einem asynchronen Übertragungsprinzip ("asynchronous transfer mode") arbeitende ATM-Kommunikationseinrichtung KE beispielsweise in Form einer Vermittlungseinrichtung dargestellt, welche eine Mehrzahl von Eingängen E1 bis En sowie eine Mehrzahl von Ausgängen A1 bis An aufweist. Die Ein- und Ausgänge sind dabei jeweils für die Aufnahme bzw. Abgabe von einen Zellenkopf und einen Informationsteil aufweisenden Nachrichtenzellen mit einer festgelegten Übertragungsbitrate ausgelegt. An wenigstens eine festgelegte Anzahl von Eingängen E1 bis Em ist eine Behandlungseinrichtung BHE angeschlossen, die eingangsseitig mit einer Zubringerleitung ZL in Verbindung steht. Über diese Zubringerleitung erfolgt eine Übertragung eines kontinuierlichen Bitstromes ohne Zellenstruktur mit einer gegenüber der für die Ein- und Ausgänge festgelegten Bitrate höheren Übertragungsbitrate. Die Anzahl der mit der Behandlungseinrichtung BHE verbundenen Eingänge E1 bis Em entspricht dabei dem Bitratenverhältnis der für die Zubringerleitung festgelegten Übertragungsbitrate zu der für die Ein- und Ausgänge der ATM-Kommunikationseinrichtung festgelegten Übertragungsbitrate.

Darüber hinaus ist an wenigstens eine festgelegte Anzahl von Ausgängen A1 bis Am, die den zuvor erwähnten Eingängen E1 bis Em zugeordnet sein mögen, eine Auswerteeinrichtung AWE angeschlossen, die ausgangsseitig mit einer Abnehmerleitung AL verbunden ist. Diese Abnehmerleitung ist für die Übertragung eines kontinuierlichen Bitstromes vorgesehen, der dem zuvor erwähnten, auf der Zubringerleitung ZL auftretenden kontinuierlichen Bitstrom entspricht. Die Anzahl der Ausgänge A1 bis Am entspricht dabei wieder dem Bitratenverhältnis der für die Abnehmerleitung festgelegten Übertragungsbitrate zu der für diese Ausgänge festgelegten Übertragungsbitrate.

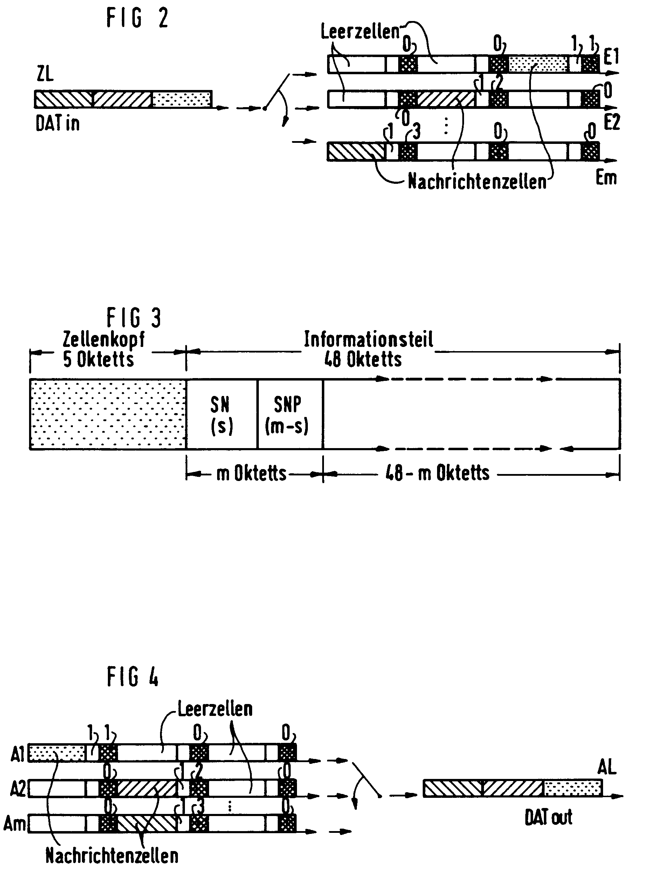

Wie in FIG 2 dargestellt, wird der auf der Zubringerleitung ZL auftretende kontinuierliche Bitstrom DATin zunächst in aufeinanderfolge Signalabschnitte unterteilt. Diese werden dann in Nachrichtenzellen eingefügt, die für eine Übertragung über die ATM-Kommunikationseinrichtung KE zyklisch auf die in FIG 1 dargestellten Eingänge E1 bis Em verteilt werden. Zwischen die ein und demselben Eingang zugeführten Nachrichtenzellen sind dabei sogenannte Leerzellen eingefügt.

Die genannten Signalabschnitte des kontinuierlichen Bitstromes DATin sind hinsichtlich ihrer Bitanzahl so festgelegt, daß diese jeweils zuzüglich einer festgelegten Anzahl von Informationsbits in dem Informationsteil einer Nachrichtenzelle übertragbar sind. Eine solche Nachrichtenzelle ist in FIG 3 schematisch dargestellt. Danach besteht eine solche beispielsweise aus 53 Oktetts, wobei die ersten fünf Oktetts in bekannter Weise eine Zellenkopf ("Header") bilden, welcher sämtliche für die Übertragung der jeweiligen Nachrichtenzelle über die ATM-Kommunikationseinrichtung erforderlichen Steuersignale enthält. An diesen Zellenkopf schließt sich der aus 48 Oktetts bestehende Informationsteil der Nachrichtenzelle an. m Oktetts bilden dabei die bereits erwähnten Informationsbits, die insgesamt m Oktetts umfassen. s Oktetts sind bei dem Ausführungsbeispiel für die Übertragung einer noch zu erläuternden Signalabschnitt-Folgenummer SN, die verbleibenden Oktetts, d.h. (m - s) Oktetts, dagegen für die Übertragung einer Prüfinformation SNP für die Signalabschnitt-Folgenummer vorgesehen. Die (48 - m) Oktetts des Informationsteiles sind schließlich für die Aufnahme eines zuvor erwähnten Signalabschnittes vorgesehen.

Wie bereits erwähnt, werden die jeweils einen Signalabschnitt enthaltenden Nachrichtenzellen zyklisch auf die Eingänge E1 bis Em verteilt. In aufeinanderfolgenden Steuerzyklen sind dabei die m Eingänge jeweils einmal in die Übertragung einer Nachrichtenzelle einbezogen, wobei die Reihenfolge bei dem vorliegenden Ausführungsbeispiel entsprechend der Numerierung der Eingänge festgelegt ist, d.h. die Nachrichtenzellen werden nacheinander den Eingängen E1, E2,..., Em zugeführt. In jedem dieser Steuerzyklen wird dabei in den Informationsteil der zu übertragenden Nachrichtenzellen eine einheitliche, lediglich von Steuerzyklus zu Steuerzyklus periodisch sich fortlaufend verändernde Signalabschnitt-Folgenummer sowie einer Prüfinformation eingetragen. Die Zählperiode für diese Signalabschnitt-Folgenummern ist entsprechend der maximalen Laufzeit einer Nachrichtenzelle durch die ATM-Kommunikationseinrichtung KE festgelegt. In FIG 2 ist als Beispiel dargestellt, daß in die Informationsteile der im Zuge eines Steuerzyklus an die Eingänge E1 bis Em abgegebenen Nachrichtenzellen jeweils die einheitliche Signalabschnitt-Folgenummer "1" eingetragen ist.

Die den Eingängen E1 bis Em zugeführten Nachrichtenzellen werden anschließend über festgelegte Übertragungswege innerhalb der ATM-Kommunikationseinrichtung KE übertragen. Die Festlegung dieser Übertragungswege erfolgt dabei in der Weise, daß die dem Eingang E1 zugeführten Nachrichtenzellen am Ausgang A1, die dem Eingang E2 zugeführten Nachrichtenzellen am Ausgang A2 und die dem Eingang Em zugeführten Nachrichtenzellen am Ausgang Am wieder auftreten. D.h. die mit gleicher Laufnummer bezeichneten Eingänge und Ausgänge sind einander zugeordnet. Wie aus FIG 4 hervorgeht, depaketiert die Auswerteeinrichtung AWE die ihr zugeführten Nachrichtenzellen und fügt die in diesen enthaltenen Signalabschnitte zu einem dem auf der Zubringerleitung ZL auftretenden kontinuierlichen Bitstrom DATin entsprechenden kontinierlichen Bitstrom DATout zusammen, der über die Abnehmerleitung AL weitergeleitet wird. Dafür werden in aufeinanderfolgenden Steuerzyklen jeweils die Signalabschnitte mit ein und derselben Signalabschnitt-Folgenummer, im dargestellten Beispiel die Signalabschnitt-Folgenummer "1", in einer festgelegten Reihenfolge an die Abnehmerleitung AL abgegeben. Die Reihenfolge entspricht dabei der Reihenfolge, mit welcher zuvor die diese Signalabschnitte enthaltenden Nachrichtenzellen auf die Eingänge E1 bis Em verteilt worden sind. D.h. das Aneinanderfügen der Signalabschnitte im Zuge eines Steuerzyklus beginnt mit dem über den Ausgang A1 aufgenommenen Signalabschnitt und endet mit dem über den Ausgang Am aufgenommenen Signalabschnitt. Im übrigen werden die zuvor erwähnten, von der Behandlungseinrichtung BHE zwischen Nachrichtenzellen eingefügten Leerzellen von der Auswerteeinrichtung AWE als solche erkannt und vernichtet.

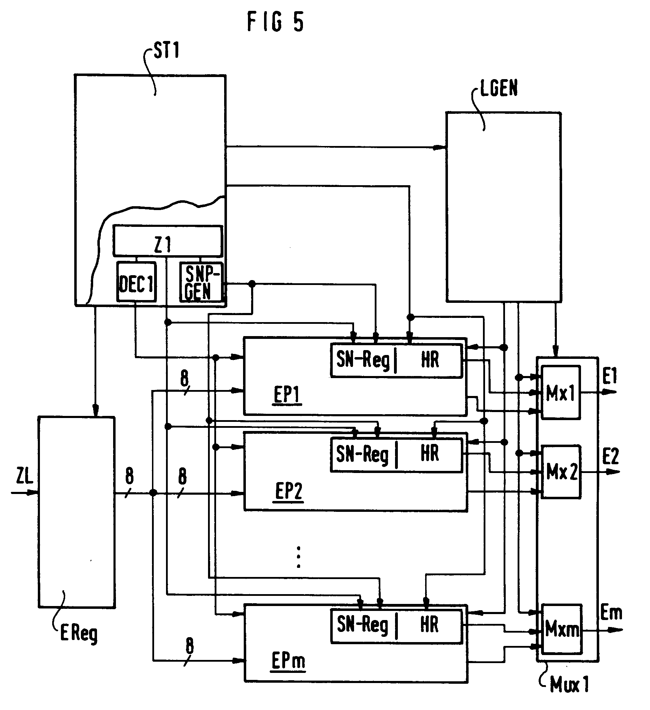

In FIG 5 ist ein möglicher Aufbau der zuvor erwähnten Behandlungseinrichtung BHE dargestellt. Danach weist diese ein mit der Zubringerleitung ZL verbundenes Empfangsregister EReg auf. Dieses wird von einer Steuereinrichtung ST1 her derart gesteuert, daß dieses Empfangsregister jeweils nach Empfang einer einem Signalabschnitt entsprechenden Anzahl von Bits den jeweiligen Signalabschnitt an seinem Ausgang bereitstellt. Dieser Ausgang ist mit m Empfangspuffern EP1 bis EPm verbunden. Diese Empfangspuffer werden von der Steuereinrichtung ST1 her periodisch wiederholt nacheinander in der oben bereits angegebenen Reihenfolge für die Aufnahme der von dem Empfangsregister EReg abgegebenen Signalabschnitte aktiviert. Hierzu erhalten diese von einem der Steuereinrichtung zugehörigen Decodierer DEC1 entsprechende Steuersignale zugeführt. Für die Aufnahme der Signalabschnitte enthalten die Empfangspuffer jeweils einen Speicher beispielsweise in Form eines Registers. Darüber hinaus sind in den Empfangspuffern jeweils zwei weitere Register vorgesehen. In ein erstes mit SN-Reg bezeichnetes Register wird von der Steuereinrichtung ST her eine für sämtliche Empfangspuffer einheitliche, lediglich von Steuerzyklus zu Steuerzyklus sich fortlaufend verändernde Signalabschnitt-Folgenummer mit zugehöriger Prüfinformation eingetragen. Das zweite, mit HR bezeichnete Register dient dagegen für die Speicherung eines festgelegten, von der Steuereinrichtung ST her abgegebenen Zellenkopfes.

Die Ausgänge der gerade genannten Register jedes der Empfangspuffer EP1 bis EPm sind mit Eingängen eines gesonderten Multiplexers verbunden. Die einzelnen Multiplexer sind entsprechend ihrer Zuordnung zu den einzelnen Empfangspuffern mit Mx1 bis Mxm bezeichnet. Ein weiterer Eingang jeder der Multiplexer ist an einen Leerzellen- und Steuersignal-Generator LGEN angeschlossen. Von diesem Generator her werden die Empfangspuffer EP1 bis EPm und die Multiplexer Mx1 bis Mxm über Steuerleitungen derart gesteuert, daß nach Maßgabe der in den genannten Registern der Empfangspuffer gerade gespeicherten Informationen Nachrichtenzellen gemäß FIG 3 gebildet und über die Multiplexer an die in FIG 1 dargestellten Eingänge E1 bis Em der ATM-Kommunikationseinrichtung KE abgegeben werden.

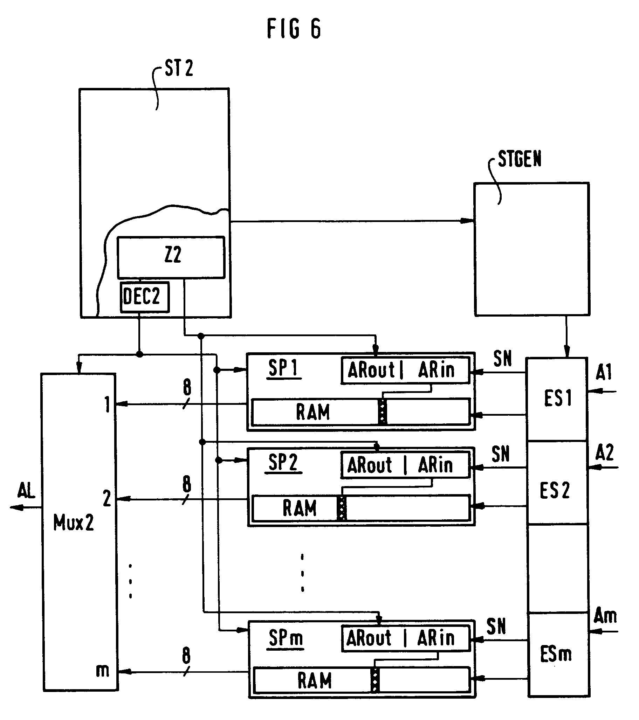

In FIG 6 ist ein möglicher Aufbau der in FIG 1 dargestellten Auswerteeinrichtung AWE dargestellt. Diese weist mit den Ausgängen A1 bis Am verbundene Nachrichtenzellen-Aufnahmeregister ES1 bis ESm auf. Diese leiten unter der Steuerung eines Steuersignalgenerators STGEN jeweils bei Empfang einer Nachrichtenzelle nach deren Überprüfung anhand der Prüfinformation den in dieser enthaltenen Signalabschnitt sowie die zugehörige Signalabschnitt-Folgenummer SN an einen gesondert zugeordneten Sendepuffer weiter. Die einzelnen Sendepuffer sind entsprechend ihrer Zuordnung zu den Nachrichtenzellen-Aufnahmeregistern mit SP1 bis SPm bezeichnet. Jedem dieser Sendepuffer ist ein Schreib-/Lese-Speicher RAM mit einer der zuvor erwähnten Zählperiode für die Signalabschnitt-Folgenummern entsprechenden Anzahl von Speicherplätzen sowie ein Schreibadressen-Register ARin zugehörig. Der Schreib-/Lese-Speicher RAM dient dabei für die Speicherung von Signalabschnitten. Als Speicheradresse für den jeweiligen Signalabschnitt wird dabei die diesem zugehörige Signalabschnitt-Folgenummer benutzt, welche in das Schreibadressen-Register ARin eingetragen wird.

Darüber hinaus weisen die Sendepuffer SP1 bis SPm jeweils ein Leseadressen-Register ARout auf. In die einzelnen Leseadressen-Register wird von einer Steuereinrichtung ST2 her in aufeinanderfolgenden Steuerzyklen jeweils eine identische Leseadresse für die Schreib-/Lese-Speicher RAM eingetragen. Die für einen Steuerzyklus gültige Leseadresse stellt ein der Steuereinrichtung ST2 zugehöriger Zähler Z2 bereit, dessen Zählperiode der genannten Zählperiode für die Signalabschnitt-Folgenummern entspricht. Die für die aufeinanderfolgenden Steuerzyklen bereitgestellten Leseadressen weisen im übrigen gegenüber den in Nachrichtenzellen auftretenden Signalabschnitt-Folgenummern einen festgelegten Versatz auf.

Die Schreib-/Lese-Speicher RAM der Sendepuffer SP1 bis SPm stellen jeweils den unter der gerade bereitgestellten Leseadresse gespeicherten Signalabschnitt bereit. Unter der Steuerung eines der Steuereinrichtung ST2 zugehörigen Dekodierers DEC2 werden die einzelnen bereitgestellten Signalabschnitte nacheinander Eingängen eines Multiplexers Mux2 zugeführt, der an seinem mit der in FIG 1 dargestellten Abnehmerleitung AL verbundenen Ausgang den oben erwähnten kontinuierlichen Bitstrom abgibt. Die Freigabe der einzelnen Sendepuffer beginnt dabei mit dem Sendepuffer SP1 und endet mit dem Sendepuffer SPm.

Abschließend sei noch darauf hingewiesen, daß zwar vorstehend die vorliegende Erfindung am Beispiel einer einzigen ATM-Kommunikationseinrichtung (KE) erläutert worden ist. Die Erfindung ist jedoch auch in einem eine Mehrzahl derartiger ATM-Kommunikationseinrichtungen aufweisenden ATM-Netz anwendbar. In diesem Falle werden in einer ersten, als Ursprungs-Kommunikationseinrichtung dienenden ATM-Kommunikationseinrichtung in der oben angegebenen Weise aus einem kontinuierlichen Bitstrom Nachrichtenzellen gebildet und über eine Mehrzahl von Übertragungswegen über das ATM-Netz übertragen. In einer für den ursprünglichen kontinuierlichen Bitstrom als Ziel-Kommunikationseinrichtung dienenden ATM-Kommunikationseinrichtung werden dann die Nachrichtenzellen in der angegebenen Weise wieder zu einem kontinuierlichen Bitstrom zusammengefügt.

## Patentansprüche

1. Verfahren zum Übertragen von in einem kontinuierlichen Bitstrom (DATin) mit einer ersten Übertragungsbitrate auftretenden Nachrichtensignalen über ein nach einem asynchronen Übertragungsverfahren arbeitendes und eine Mehrzahl von Eingängen und Ausgängen aufweisendes ATM-Netz mit wenigstens einer ATM-Kommunikationseinrichtung (KE), wobei die Eingänge (E1 bis En) und Ausgänge (A1 bis An) jeweils für die Aufnahme bzw. Abgabe von Nachrichtensignalen in Form von einen Zellenkopf und einen Informationsteil aufweisenden Nachrichtenzellen mit einer gegenüber der ersten Übertragungsbitrate niedrigeren zweiten Übertragungsbitrate ausgelegt sind,
**dadurch gekennzeichnet**,
daß die in dem kontinuierlichen Bitstrom auftretenden Nachrichtensignale in aufeinanderfolgende Signalabschnitte unterteilt werden, deren jeweilige Bitanzahl derart einheitlich festgelegt ist, daß diese zuzüglich einer festgelegten Anzahl von Informationsbits der Anzahl der in dem Informationsteil einer Nachrichtenzelle als Nutzsignale übertragbaren Bits entspricht,
daß in aufeinanderfolgenden Steuerzyklen jeweils eine dem Bitratenverhältnis der ersten zur zweiten Übertragungsbitrate entsprechende Anzahl von Signalabschnitten jeweils in den Informationsteil einer Nachrichtenzelle eingefügt und in die jeweiligen Informationsteile als Informationsbits dabei eine sich fortlaufend verändernde Signalabschnitt-Folgenummer eingetragen wird,
daß die im Zuge eines Steuerzyklus auftretenden Nachrichtenzellen nacheinander auf eine dem betreffenden Bitratenverhältnis entsprechende Anzahl von Eingängen (E1 bis Em) des ATM-Netzes verteilt und über die betreffenden Eingänge zu diesen zugeordneten Ausgängen (A1 bis Am) des ATM-Netzes hin übertragen werden,
daß den an den betreffenden Ausgängen auftretenden Nachrichtenzellen der in diesen jeweils enthaltene Signalabschnitt sowie die diesem zugehörige SignalabschnittFolgenummer entnommen werden
und daß anschließend die einzelnen Signalabschnitte nach Maßgabe der Signalabschnitt-Folgenummern wieder zu einem kontinuierlichen Bitstrom aneinandergefügt werden.

2. Verfahren nach Anspruch 1,
**dadurch gekennzeichnet**,
daß in den Informationsteil der im Zuge eines Steuerzyklus gebildeten Nachrichtenzellen jeweils als Informationsbits eine einheitliche, lediglich von Steuerzyklus zu Steuerzyklus sich ändernde Signalabschnitt- Folgenummer eingetragen wird und die Nachrichtenzellen nacheinander in einer festgelegten Reihenfolge auf die betreffenden Eingänge (E1 bis Em) des ATM-Netzes verteilt werden
und daß die den an den betreffenden Ausgängen (A1 bis Am) des ATM-Netzes auftretenden Nachrichtenzellen entnommenen Signalabschnitte in einer der festgelegten Reihenfolge entsprechenden Reihenfolge und nach Maßgabe der Signalabschnitt-Folgenummern zu einem kontinuierlichen Bitstrom aneinandergefügt werden.

3. Verfahren nach Anspruch 1 oder 2,
**dadurch gekennzeichnet**,
daß in den Informationsteil der Nachrichtenzellen jeweils als Informationsbits neben einer Signalabschnitt-Folgenummer eine für deren Überprüfung auf eine fehlerfreie Übertragung dienende Prüfinformation eingetragen wird.

4. Schaltungsanordnung zur Durchführung des Verfahrens nach Anspruch 1 mit einem wenigstens eine ATM-Kommunikationseinrichtung (KE) aufweisenden ATM-Netz, welches mit wenigstens einer Zubringerleitung (ZL), über die Nachrichtensignale in einem kontinuierlichen Bitstrom (DATin) mit einer ersten Übertragungsbitrate übertragbar sind, und mit wenigstens einer Abnehmerleitung (AL) für die Weiterleitung von Nachrichtensignalen in einem kontinuierlichen Bitstrom (DATout) verbunden ist
und welches über interne Eingänge (E1 bis En) und Ausgänge (A1 bis An) verfügt, welche für die Aufnahme bzw. Abgabe von Nachrichtensignalen in Form von einen Zellenkopf und einen Informationsteil enthaltenden Nachrichtenzellen mit einer gegenüber der ersten Übertragungsbitrate niedrigeren Übertragungsbitrate ausgelegt sind,
**dadurch gekennzeichnet**,
daß wenigstens eine erste Schnittstellenanordnung (BHE) vorgesehen ist, welche einerseits mit der jeweiligen Zubringerleitung (ZL) und andererseits mit einer dem Bitratenverhältnis der ersten zur zweiten Übertragungsbitrate entsprechenden Anzahl von internen Eingängen (E1 bis Em) des ATM-Netzes verbunden ist,
daß die erste Schnittstellenanordnung (BHE) eine mit der jeweiligen Zubringerleitung verbundene Verteileinrichtung (EReg, ST1) aufweist, welche den zugeführten kontinuierlichen Bitstrom (DATin) in aufeinanderfolgende Signalabschnitte unterteilt, deren jeweilige Bitanzahl derart einheitlich festgelegt ist, daß diese zuzüglich einer festgelegten Anzahl von Informationsbits der Anzahl der in dem Informationsteil einer Nachrichtenzelle als Nutzsignale übertragbaren Bits entspricht, und welche in aufeinanderfolgenden Steuerzyklen jeweils eine dem betreffenden Bitratenverhältnis entsprechende Anzahl von Signalabschnitten in einer festgelegten Reihenfolge auf mit den betreffenden internen Eingängen (E1 bis Em) des ATM-Netzes verbundene Paketiereinrichtungen (EP1, Mx1;...; EPm, Mxm; ST1) verteilt,
daß die Paketiereinrichtungen im Zuge des jeweiligen Steuerzyklus jeweils den gerade zugeführten Signalabschnitt zusammen mit Informationsbits in Form einer für sämtliche Paketiereinrichtungen einheitlichen, lediglich von Steuerzyklus zu Steuerzyklus sich ändernden SignalabschnittFolgenummer in eine Nachrichtenzelle einfügen und diese Nachrichtenzelle dem zugeordneten internen Eingang des ATM-Netzes zuführen,
daß wenigstens eine zweite Schnittstellenanordnung (AWE) vorgesehen ist, welche einerseits mit der jeweiligen Abnehmerleitung (AL) and andererseits mit einer dem betreffenden Bitratenverhältnis entsprechenden, der genannten Anzahl von internen Eingängen (E1 bis Em) zugeordneten Anzahl von internen Ausgängen (A1 bis Am) des ATM-Netzes verbunden ist,
daß die zweite Schnittstellenanordnung mit den internen Ausgängen verbundene Depaketiereinrichtungen (ES1, SP1; ...; ESm, SPm; ST2) aufweist, welche jeweils den an dem zugehörigen internen Ausgang auftretenden Nachrichtenzellen jeweils den darin enthaltenden Signalabschnitt sowie die Signalabschnitt-Folgenummer entnehmen und den jeweiligen Signalabschnitt nach Maßgabe der Signalabschnitt-Folgenummer zunächst in einen zugehörigen Schreib-/Lese-Speicher (RAM) unter einer der Signalabschnitt-Folgenummer entsprechenden Schreibadresse zwischenspeichern, daß die den Depaketiereinrichtungen zugehörigen Schreib-/Lese-Speicher (RAM) in aufeinanderfolgenden Steuerzyklen jeweils derart nach Maßgabe einer einheitlichen, lediglich von Steuerzyklus zu Steuerzyklus sich ändernden Leseadresse ansteuerbar sind, daß diese Schreib-/Lese-Speicher nacheinander in einer der genannten festgelegten Reihenfolge entsprechenden Reihenfolge jeweils den unter der Leseadresse gerade gespeicherten Signalabschnitt bereitstellen,
und daß die bereitgestellten Signalabschnitte in einer den Depaketiereinrichtungen nachgeschalteten, mit der jeweiligen Abnehmerleitung (AL) verbundenen Multiplexeinrichtung (Mux) zu dem kontinuierlichen Bitstrom (DATout) aneinandergefügt sind.
